# EUROPÄISCHE PATENTSCHRIFT

(11) **EP 0 659 064 B1**
(45) Veröffentlichungstag und Bekanntmachung des Hinweises auf die Patenterteilung: **02.10.1996**
(21) Anmeldenummer: 93918943.7
(22) Anmeldetag: 03.09.1993
(51) Int. Cl.: A61C 17/22

(54) **MOTORISCH BETRIEBENES GERÄT DES PERSÖNLICHEN BEDARFS**
MOTOR-DRIVEN APPLIANCE FOR PERSONAL USE
APPAREIL A MOTEUR, A USAGE PERSONNEL

(30) Priorität: 09.09.1992 DE 4230159
(43) Veröffentlichungstag der Anmeldung: 28.06.1995
(73) Patentinhaber: Braun Aktiengesellschaft, 60326 Frankfurt am Main (DE)
(72) Erfinder: HILFINGER, Peter, D-61350 Bad Homburg (DE); KRESSNER, Gerhard, D-63674 Altenstadt (DE); SAUER, Michael, D-65520 Bad Camberg (DE)
(74) Vertreter: Vorbeck, Wolfgang Ernst August, Dr.
(86) Internationale Anmeldenummer: DE9300805
(87) Internationale Veröffentlichungsnummer: WO9405228

(56) Entgegenhaltungen:
- DE-U- 9 004 932
- DE-U- 9 101 850

## Beschreibung

Die Erfindung betrifft ein motorisch betriebenes Gerät des persönlichen Bedarfs, wie z.B. Mund- oder Zahnpflegegerät, Rasierer oder ähnliches mit einem Gehäuse zur Aufnahme der Antriebsmittel sowie wenigstens einer wiederaufladbaren Energiespeicherzelle, wobei das Gehäuse aus wenigstens zwei Gehäuseteilen besteht, die dichtend miteinander verbindbar sind, und wobei dem Gerät eine Gehäusestruktur zugeordnet ist, die insbesondere Mittel zur Ladung der Energiespeicherzellen oder insbesondere Mittel zur Aufnahme von Zusatzteilen für das Gerät aufweist.

Eine motorisch betriebene Zahnbürste dieser Art ist bereits in der auf die Patentanmelderin zurückgehende DE 39 37 877 C1 offenbart. Diese Zahnbürste besteht aus einem zweiteiligen Gehäuse, welches die funktionsbedingten Teile, wie z.B. einen Elektromotor, ein Getriebe, eine Antriebswelle, wenigstens eine Energiespeicherzelle und eine Induktionsspule enthält. Zur dichtenden Verbindung beider Gehäuseteile werden diese miteinander verklipst oder verrastet. Eine erneute Öffnung der Zahnbürste, d.h. eine Trennung beider Gehäuseteile beispielsweise zur Entnahme der verbrauchten Energiespeicherzelle zwecks separater Entsorgung ist ohne zusätzliches Werkzeug praktisch nicht und mit zusätzlichem Werkzeug, wie Zange, Säge oder Messer, für den Benutzer nur schwer möglich.

Werden die beiden Gehäuseteile eines Gerätes miteinander verklebt oder verschweißt, so sind zur Öffnung des Gerätes in jedem Fall scharfkantige Werkzeuge erforderlich, die insbesondere für den durchschnittlichen, handwerklich nicht sonderlich ausgebildeten Benutzer eine Verletzungsgefahr darstellen.

In der Druckschrift DE 91 01 850 U1, die dem Oberbegriff des Anspruchs 1 zugrunde liegt, ist eine elektrische Zahnbürste offenbart mit einem im Querschnitt elliptischen Zahnbürstengehäuse und einem Schließkörper, der an dem, dem Bürstenkörper abgewandten Ende lösbar angeordnet ist. Zwischen Zahnbürstengehäuse und Schließkörper befindet sich eine Ringnut. Zum Öffnen wird das Zahnbürstengehäuse in eine Ausnehmung eines Ladeteils eingeführt, so daß ein nasenartig in die Öffnung hineinragender Trennkörper in die Ringnut eingreift, und dann das elliptische Gehäuse gedreht. Nachteilig ist hierbei, daß sich in der Ringnut Reste von Zahnpasta oder Schmutzpartikel ablagern können, wodurch einerseits eine hygienisch einwandfreie Handhabung der Zahnbürste erschwert und andererseits das Eingreifen der Nase in die Ringnut verhindert werden kann. Die konstruktive Ausbildung der Öffnungsvorrichtung ist besonders für den ungeübten, durchschnittlichen Benutzer nur schwer verständlich bzw. handhabbar. Die Gefahr, daß der Benutzer die Vorrichtung gar nicht benutzt, um z.B. verbrauchte Akkumulatoren zu entsorgen, ist somit groß.

Eine dem Gerät zugeordnete Gehäusestruktur, die Mittel zur Ladung der Energiespeicherzelle oder Mittel zur Aufnahme von Zusatzteilen für das Gerät aufweist, ist bereits in der Patentanmeldung DE 37 31 587 A1 bzw. der entsprechenden US 5,033,617 A der Anmelderin offenbart. Es handelt sich hierbei um eine Gehäusestruktur, die im wesentlichen zur Aufnahme von Geräten zur Hund- und Zahnpflege dient, wobei die Geräte weitestgehend gegen eine Verschmutzung durch äußere Einflüsse geschützt, aber beim Herausnehmen dennoch gut erkennbar und zugänglich sind. Eine über die Aufnahme von Zusatzteilen für das Gerät bzw. die Ladung der Energiespeicherzelle hinausgehende Funktion der Gehäusestruktur ist dieser Schrift nicht zu entnehmen.

Aufgabe der Erfindung ist es, eine benutzerfreundliche Möglichkeit zur Öffnung des Gerätegehäuses anzugeben. Diese Aufgabe wird im wesentlichen dadurch gelöst, daß die Gehäusestruktur zwei Widerlager aufweist, die als integraler Bestandteil der Gehäusestruktur ein Werkzeug zum Trennen der Gehäuseteile bilden. Die Trennung der Gehäuseteile ist vom Benutzer selbst ohne größeren Aufwand oder zusätzliches Werkzeug durchführbar. Dadurch, daß die Integration des Werkzeuges durch eine Umgestaltung der Gehäusestruktur erfolgt, ist kein separates, zusätzliches, u.U. verleg- oder verlierbares Werkzeug erforderlich und darüberhinaus die angegebene Lösung insgesamt kostengünstig. Eine Verletzungsgefahr beim Öffnen des Gehäuses wird dadurch ausgeschlossen, daß das Werkzeug lediglich aus zwei Widerlagern besteht und keine scharfkantigen Ausbildungen aufweist. Der Benutzer hat ein Gehäuseteil des Gerätes mit einer Hand in die Gehäusestruktur einzuführen, die Gehäusestruktur mit der anderen Hand festzuhalten und das Gerät anschließend hebelartig zu schwenken. Dabei wird das eine Gehäuseteil durch die Wirkung der Widerlager in seiner Positionierung festgelegt, während das andere Gehäuseteil der Hebelbewegung folgen kann. Nach Überschreiten einer bestimmten Hebelkraft löst sich die Verbindung der beiden Gehäuseteile, so daß das Gehäuse zwecks Entnahme der Energiespeicherzelle oder auch anderer, im Gehäuse angeordneter Teile geöffnet werden kann.

Dadurch, daß die Widerlager in einem Abstand versetzt zueinander angeordnet sind, der in etwa der axialen Länge eines der Gehäuseteile entspricht, ist aufgrund der günstigen Hebelwirkung nur ein geringer Kraftaufwand zur Trennung der Gehäuseteile erforderlich, so daß jeder Benutzer in die Lage versetzt wird, das Gerät im Bedarfsfall eingenständig öffnen zu können.

In einer Ausgestaltung der Erfindung sind die Widerlager als Aufnahmemittel und Anschlagmittel ausgebildet, wobei die Aufnahmemittel eine sichere Positionierung des Gerätes gewährleisten, so daß durch die über die Anschlagmittel ermöglichte Hebelwirkung bzw. die damit auf die Gehäuseteile ausgeübte Kraft eine Trennung der Gehäuseteile durchführbar ist.

In einer Weiterbildung der Erfindung bilden eine Aufnahmeöffnung und eine Innenwand der Aufnahmeöffnung die beiden Widerlager. Vorteilhaft kommt dabei das Gehäuse an der Aufnahmeöffnung und der Innenwand der Aufnahmeöffnung zur Anlage, so daß bei der nachfolgenden Hebelbewegung des Gehäuses eine Trennung der Gehäuseteile erfolgt.

Von Vorteil wird das eine Widerlager durch eine Rückwand der Gehäusestruktur und das zweite Widerlager durch einen Zwischenboden der Gehäusestruktur gebildet. Dabei ist der Zwischenboden der Gehäusestruktur derart an das Gehäuse angepaßt, daß eine exakte Aufnahme des Gerätes ermöglicht wird. Die Rückwand der Gehäusestruktur bildet den Anschlag für die Hebelbewegung.

In einer Weiterbildung der Erfindung weist die Rückwand der Gehäusestruktur eine Aussparung auf und die Aussparung sowie das Gehäuse weisen im wesentlichen gleiche, im Durchmesser aufeinander abgestimmte Querschnitte auf. Diese Ausgestaltung ermöglicht eine praktisch spielfreie Einführung des Gerätes in die Gehäusestruktur, so daß die Trennung der Gehäuseteile vereinfacht wird.

In einer Ausgestaltung der Erfindung weist die Gehäusestruktur einen Dom und eine dem Dom gegenüberliegende Fläche auf, wobei der Dom das eine Widerlager und die gegenüberliegende Fläche das zweite Widerlager bilden. Hierbei dient der Dom zur Aufnahme und Positionierung des Gerätes, während die gegenüberliegende Fläche als Anschlagmittel wirkt.

Dadurch, daß das Gehäuse eine Aussparung zur Aufnahme des Doms aufweist und die Aussparung im wesentlichen für eine flächige Anlage am Dom ausgebildet ist, erfolgt eine Sicherung gegen Verkanten bzw. Herausgleiten des Gerätes bei Einsatz der Hebelwirkung.

In einer Weiterbildung der Erfindung ist die dem Dom gegenüberliegende Fläche im wesentlichen zylindrisch gekrümmt und das Gehäuse des Gerätes vorzugsweise zylindrisch ausgebildet, wobei die gekrümmte Fläche sowie das Gehäuse im wesentlichen gleiche Krümmungsradien aufweisen. Diese Ausbildung gestattet eine genaue Anlage für das Gerät an der gekrümmten Fläche, wodurch die Trennung der Gehäuseteile mit minimalem Kraftaufwand möglich wird.

In einer weiteren Ausgestaltung der Erfindung werden die beiden Widerlager durch die Aufnahmeöffnung selbst gebildet. Wird das Gehäuse hebelartig bewegt, kommt es zu einer elastischen Verformung der Wand der Gehäusestruktur, in welcher sich die Aufnahmeöffnung befindet, wodurch die Gehäuseteile getrennt werden.

In einer Weiterbildung der Erfindung weist die Aufnahmeöffnung einen Innendurchmesser auf, der im wesentlichen dem Außendurchmesser des Gehäuses entspricht. Diese Ausbildung gestattet eine nahezu spielfreie Anordnung des Gehäuses in der Aufnahmeöffnung.

Von Vorteil ist die Aufnahmeöffnung vorzugsweise in einer Seitenwand der Gehäusestruktur angeordnet. Diese Ausführungsform ist fertigungstechnisch einfach zu realisieren und damit preiswert. Ein Verfahren zur Trennung der Gehäuseteile eines motorisch betriebenen Gerätes des persönlichen Bedarfs ist durch folgende Schritte gekennzeichnet: das Gehäuse wird mit einem Gehäuseteil so in die Gehäusestruktur eingebracht, daß das Gehäuseteil zwischen den Widerlagern angeordnet ist, die Gehäusestruktur wird mit einer Hand des Benutzers festgehalten und das Gehäuse mit der anderen Hand des Benutzers hebelartig geschwenkt, wobei das Gehäuseteil durch die Widerlager in seiner Position festgelegt wird, während das andere Gehäuseteil der Hebelbewegung folgt, wodurch die Trennung der Gehäuseteile erfolgt. Dadurch, daß das Werkzeug zur Gehäusetrennung in die Gehäusestruktur integriert ist und durch Widerlager gebildet wird, kann diese Trennung vom Benutzer selbst auf einfache Weise und ohne zusätzliches Werkzeug durchgeführt werden.

In einer äußerst vorteilhaften Weiterbildung der Erfindung sind beide Widerlager am Dom vorgesehen. Eine Trennung der Gehäuseteile kann bei dieser Weiterbildung mittels einer Drehbewegung des Gehäuses herbeigeführt werden, wobei hierzu das Gehäuse auf den Dom aufgesetzt wird. Eine zusätzliche Schwenk- oder Hebelbewegung des Gehäuses ist nicht erforderlich. Diese Art der Gehäusetrennung kann ebenso einfach und wirkungsvoll bei zylindrischen Gehäusen, wie auch bei Gehäusen mit beliebigem, d.h. beispielsweise dreieckigem oder viereckigem Querschnitt, durchgeführt werden.

Von Vorteil wird das eine Widerlager durch den Dom und das zweite Widerlager durch eine einseitig am Dom vorgesehene nasenförmige Erhebung gebildet. Das Gehäuse wird mit der Ausnehmung des Gehäuseteiles, die in etwa als Gegenstück zum Dom einschließlich nasenförmiger Erhebung ausgebildet ist, vom Dom im wesentlichen spielfrei und formschlüssig aufgenommen, wodurch insgesamt das Gehäuse gegen radiale Verschiebung gesichert ist. Wird zur Trennung der beiden Gehäuseteile durch Krafteinwirkung auf das Gehäuse das Gehäuse gedreht, so wird durch die formschlüssige Anlage zwischen Gehäuseteil und nasenförmiger Erhebung und die dadurch erzeugte Gegenkraft das Gehäuseteil in seiner Position gesichert und eine einfache Trennung beider Gehäuseteile herbeigeführt.

Ein weiteres Verfahren zur Trennung von Gehäuseteilen eines motorisch betriebenen Gerätes des persönlichen Bedarfs ist durch folgende Schritte gekennzeichnet: Das Gehäuse wird mit dem Gehäuseteil von dem Benutzer auf die Gehäusestruktur aufgesetzt, so daß der Dom von der Ausnehmung aufgenommen ist, das Gehäuse wird von einer Hand des Benutzers umfaßt, wobei die Gehäusestruktur mit der zweiten Hand des Benutzers festgehalten wird und das Gehäuse wird um eine Längsmittelachse gedreht. Durch die Drehung des Gehäuses wird eine Rastverbindung zwischen den Gehäuseteilen aufgehoben und dadurch beide Gehäuseteile getrennt, wobei diese Trennung problemlos vom Benutzer selbst durchgeführt werden kann.

Weitere Merkmale, Vorteile und Anwendungsmöglichkeiten der Erfindung ergeben sich aus den nachfolgenden Beschreibungen der Ausführungsbeispiele, die in den Zeichnungen näher dargestellt sind. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen und deren Rückbeziehung.

Es zeigen:
- Fig. 1: in einem ersten Ausführungsbeispiel der Erfindung eine Gehäusestruktur (im Schnitt) mit in eine Aufnahmeöffnung eingeführter Zahnbürste (in Seitenansicht);
- Fig. 2: eine Ansicht der Rückseite der Gehäusestruktur der Figur 1;
- Fig. 3: in einem zweiten Ausführungsbeispiel der Erfindung ein Ladeteil (in Seitenansicht) mit aufgesetzter Zahnbürste (im Schnitt);
- Fig. 4: eine Draufsicht auf das Ladeteil der Figur 3;
- Fig. 5: in einem dritten Ausführungsbeispiel der Erfingung ein Ladeteilabschnitt (in Seitenansicht) mit aufgesetzter Zahnbürste (im Schnitt).

In den Figuren ist eine Zahnbürste 10 mit einem Gehäuse 12 dargestellt, die über einen Elektromotor 20 antreibbar ist, der von Energiespeicherzellen 18 mit Strom versorgt wird. Über eine Induktionsspule 19 werden die Energiespeicherzellen 18 induktiv aufgeladen, sobald die Zahnbürste 10 auf einen Dom 38 einer Gehäusestruktur 22 aufgesetzt wird, welche die Mittel zur Ladung 24 enthält. Eine Ausnehmung 16 des Gehäuses 12 nimmt den Dom 38 auf.

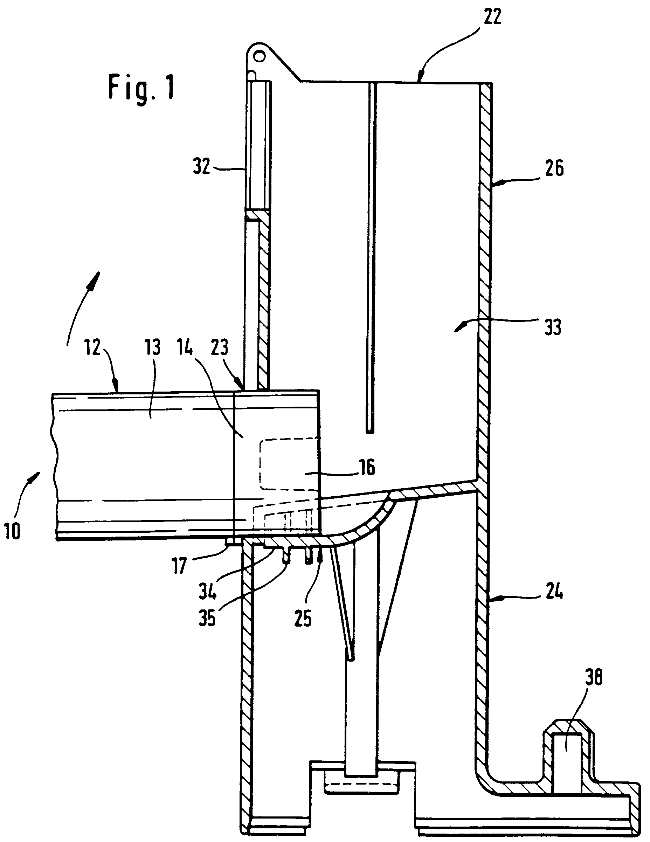

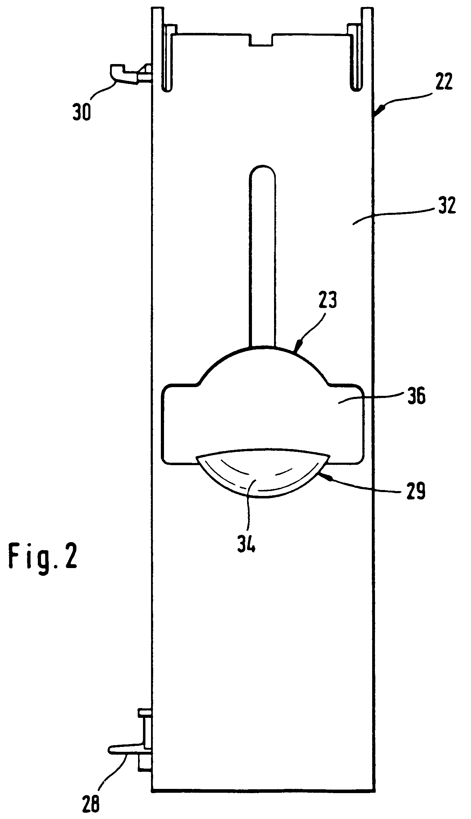

Darüberhinaus weist die in den Figuren 1, 2 dargestellte Gehäusestruktur 22 gemäß dem ersten Ausführungsbeispiel an ihrer Rückwand 32 eine Aufnahmeöffnung 23 auf, die als Aussparung 36 ausgebildet ist. In diese Aufnahmeöffnung 23 ist die Zahnbürste 10 teilweise eingeführt. Eine Innenwand 25 der Aufnahmeöffnung 23, vorzugsweise ein Zwischenboden 34, ist so ausgebildet, daß er eine exakte Lagerung des Gehäuseteils 14 des Gerätes 10 ermöglicht. An der Unterseite des Zwischenbodens 34 angeformte Versteifungen 35 erhöhen die Festigkeit des Bodens, der als Aufnahme 29, d.h. als eines der Widerlager für den Trennvorgang ausgebildet ist. Für den Trennvorgang wird das Gehäuse 12 mit seinem Gehäuseteil 14 in die Gehäusestruktur 22 eingebracht und zwischen den Widerlagern angeordnet. Dabei kommt es auf dem Zwischenboden 34 zur Anlage. Eine Wegrollsicherung 17, die vorzugsweise beiderseits der Trennlinie der Gehäuseteile 13 bzw. 14 angeordnet ist, dient dabei als Anschlag für das einzuschiebende Gehäuseteil 14. Die Gehäusestruktur 22 wird nunmehr einhändig festgehalten, das Gehäuseteil 13 der Zahnbürste 10 mit der anderen Hand des Benutzers umfaßt und hebelartig bis zur Trennung der Gehäuseteile 13, 14 in Richtung Oberkante der Gehäusestruktur 22 bewegt. Dabei werden die beiden Widerlager durch den Zwischenboden 34 sowie die Oberkante der Aufnahmeöffnung 23 gebildet. Nach der Trennung der Gehäuseteile 13 und 14 ist die Entnahme der Energiespeicherzellen 18, die im unteren Teil des Gehäuses 12 angeordnet sind, problemlos möglich. Natürlich können bei geöffnetem Gehäuse 12 auch weitere Bestandteile der Antriebsmittel, wie Motor, Getriebe, Platinen oder andere elektrische oder mechanische Bauteile zur Entsorgung oder zum Ersetzen entnommen werden. Die Gehäusestruktur 22 enthält neben dem Werkzeug zur Trennung der Gehäuseteile 13 und 14 im oberen Bereich die Mittel zur Aufnahme 26 von Zusatzteilen für die Zahnbürste bzw. im unteren Bereich die Mittel zur Ladung 24 der Energiespeicherzellen 18.

In Fig. 2 ist die Rückseite 32 der Gehäusestruktur 22, die die Aufnahmeöffnung 23 für das Gehäuse 12 enthält, dargestellt. Die der Aufnahmeöffnung 23 entsprechende Aussparung 36 weist einen im wesentlichen zylindrischen Querschnitt auf und geht in ihrem unteren Bereich in den speziell ausgeformten Zwischenboden 34 über. Dabei gestatten die im wesentlichen im Querschnitt mit dem Gehäuse 12 übereinstimmende Aussparung 36 sowie der ausgeformte Zwischenboden 34 eine exakte Aufnahme und Lagerung der Zahnbürste 10 für den Trennvorgang. Die Gehäusestruktur 22 weist als Adapter ein hakenförmiges Verbindungsstück 30 sowie eine elektrische Kupplung 28 für die Ankopplung an weitere Zahnpflegegeräte auf.

In Variation der Ausführung gemäß Figur 1 und 2 kann eine kreisrunde Aufnahmeöffnung 23 für das Gehäuse 12 vorzugsweise in einer Seitenwand 33 der Gehäusestruktur 22 angeordnet werden. Zur Trennung der Gehäuseteile 13, 14 wird das Gehäuse 12 mit seinem Gehäuseteil 14 in die kreisrunde Aufnahmeöffnung 23 eingeführt und danach hebelartig in Richtung Oberkante der Gehäusestruktur 22 bewegt. Dabei werden die beiden Widerlager durch Umfangsabschnitte der Aufnahmeöffnung 23 selbst gebildet. Die Seitenwand 33 der Gehäusestruktur 22 wird elastisch verformt und die Gehäuseteile 13, 14 getrennt.

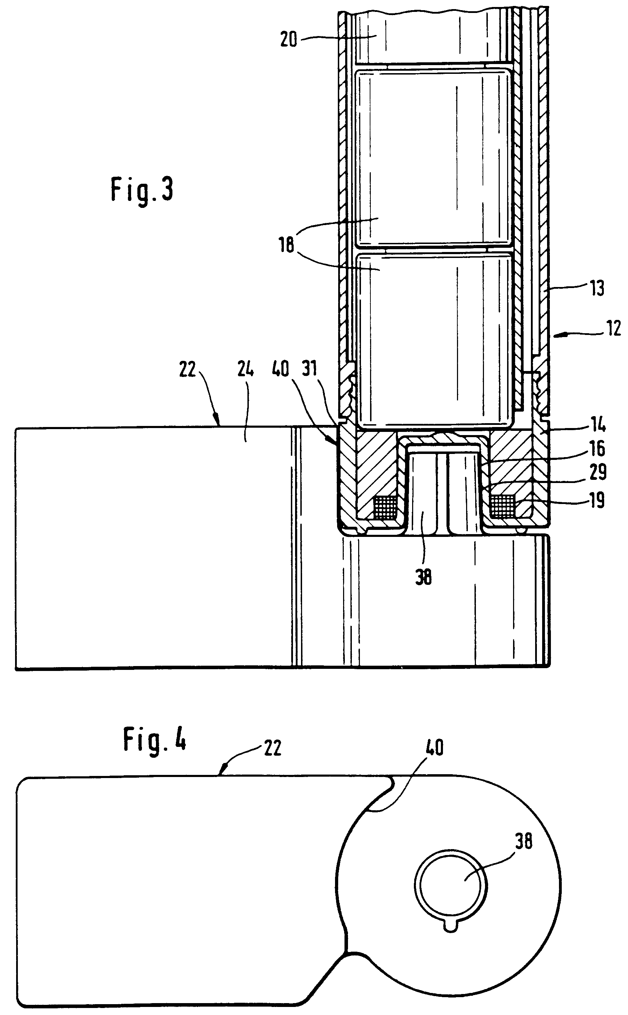

Eine Gehäusestruktur 22 gemäß einem zweiten Ausführungsbeispiel, die das Werkzeug zum Trennen der Gehäuseteile 13 und 14 sowie die Mittel zur Ladung 24 der Energiespeicherzellen 18 enthält, ist in Fig. 3 dargestellt. Ein an dieser Gehäusestruktur 22 angeordneter Dom 38 ist dabei so ausgebildet, daß er von einer im Gehäuseteil 14 vorhandenen Aussparung 16 des Gehäuses 12 vollständig aufgenommen wird. Damit dient er zunächst als Aufnahmemittel 29 für das Gehäuse 12 sowie als Widerlager während des Vorganges zum Trennen der Gehäuseteile 13 bzw. 14. Eine dem Dom gegenüberliegende Fläche 40, die das zweite Widerlager bildet, ist dabei so gekrümmt, daß sie einen mit dem Gehäuse 12 der Zahnbürste 10 übereinstimmenden Krümmungsradius aufweist. Durch diese spezielle Ausbildung liegt das Gehäuse 12 flächig an der Fläche 40 an, wobei die Trennkante zwischen den Gehäuseteilen 13 und 14 in etwa mit der Oberkante der Fläche 40 übereinstimmt. Für den Vorgang zum Trennen der Gehäuseteile 13 bzw. 14 ist das Gehäuse 12 wie für den Ladevorgang auf den Dom 38 aufgesteckt, wobei der Dom 38 und die Aussparung 16 im wesentlichen flächig aneinander anliegen. Die Gehäusestruktur 22 wird einhändig arretiert und das Gehäuse 12 in seinem Gehäuseteil 13 bis zur Trennung der Gehäuseteile 13, 14 wie ein Hebel gegen die Oberkante der Fläche 40, die dem Anschlagmittel 31 entspricht, gedrückt. Nach der Trennung kann das Gehäuse 12 geöffnet und die Energiespeicherzellen 18 vom Benutzer problemlos entnommen und separat entsorgt werden.

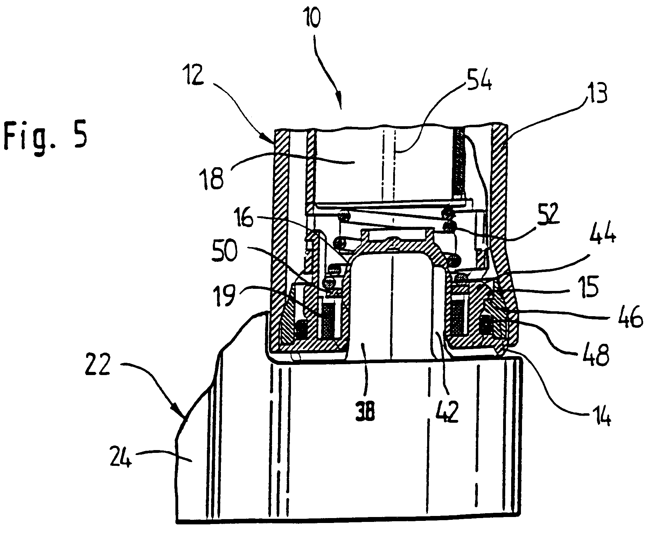

Figur 5 zeigt eine Gehäusestruktur 22 mit Zahnbürste 10, gemäß einem dritten Ausführungsbeispiel. Neben dem Werkzeug zum Trennen der Gehäuseteile 13 und 14 enthält die Gehäusestruktur 22 die für die Ladung des Gerätes erforderlichen Mittel 24. Ein an dieser Gehäusestruktur 22 angeordneter Dom 38 weist eine nasenförmige Erhebung 42 auf, die sich nahezu über die gesamte Höhe des Domes erstreckt. Eine im Gehäuseteil 14 vorgesehene Aussparung 16 ist dabei als Gegenstück zum Dom 38 einschließlich einer nasenförmigen Erhebung 42 ausgebildet. Der Dom 38 mit der nasenförmigen Erhebung 42 wird von dieser Aussparung 16 praktisch vollständig aufgenommen, sobald das Gehäuse 12 auf die Gehäusestruktur 22 aufgesetzt wird. Damit dient der Dom 38 der radialen Positionierung bzw. Sicherung des Gehäuses 12 und bildet somit ein erstes Widerlager. Wird zur Trennung beider Gehäuseteile 13 und 14 das Gehäuse 12 um eine Längsmittelachse 54 gedreht und somit auf das Gehäuseteil 14 eine Kraft ausgeübt, so wirkt die nasenförmige Erhebung 42 als zweites Widerlager. Durch die formschlüssige Anlage zur Ausnehmung 16 verhindert die nasenförmige Erhebung 42 ein Mitdrehen des Gehäuseteiles 14 und ermöglicht somit die Trennung beider Gehäuseteile 13 und 14. Bei dem Trennvorgang wird eine Raststellung zwischen Gehäuseteil 13 und Gehäuseteil 14 aufgehoben. Diese Raststellung entsteht dadurch, daß am Gehäuseteil 14 vorgesehene Vorsprünge 15 in Vorsprünge 46 eines fest mit dem Gehäuseteil 13 verbundenen Bajonettringes 44 eingreifen und zwischen beidseitig an den Vorsprüngen 46 vorgesehenen Ansätzen einrasten. Zwischen einer mittels einer Induktionsspule 19 induktiv aufgeladenen Energiespeicherzelle 18 und einer auf dem Gehäuseteil 14 angeordneten Unterlegscheibe 50 ist eine Feder 52 vorgesehen. Diese Feder 52 ermöglicht eine sichere und spielfreie Lagerung der Energiespeicherzellen 18 im Gehäuse 12, solange beide Gehäuseteile 13 und 14 fest miteinander verbunden sind, wobei ein Dichtungsring 48 das Eindringen von Feuchtigkeit zwischen die Gehäuseteile 13 und 14 verhindert. Wird während des Trennvorgangs beider Gehäuseteile 13 und 14 durch Drehen des Gehäuseteiles 13 die Rastposition zwischen den Gehäuseteilen 13 und 14 überfahren, so entspannt sich die Feder 52, wodurch unter Wirkung der Federkraft die Gehäuseteile 13 und 14 getrennt werden. Danach können die Energiespeicherzellen 18 sowie gegebenenfalls weitere, im Gehäuse 12 angeordnete Bauteile entfernt werden.

## Patentansprüche

1. Motorisch betriebenes Gerät des persönlichen Bedarfs (10), wie z. B. Mund- oder Zahnpflegegerät, Rasierer oder ähnliches mit einem Gehäuse (12) zur Aufnahme der Antriebsmittel (20) sowie wenigstens einer wiederaufladbaren Energiespeicherzelle (18), wobei das Gehäuse (12) aus wenigstens zwei Gehäuseteilen (13, 14) besteht, die dichtend miteinander verbindbar sind und mit einer dem Gerät (10) zugeordneten Gehäusestruktur (22), die insbesondere Mittel zur Ladung (24) der Energiespeicherzellen (18) oder insbesondere Mittel zur Aufnahme (26) von Zusatzteilen für das Gerät (10) aufweist, dadurch gekennzeichnet, daß die Gehäusestruktur (22) zwei Widerlager aufweist, die als integraler Bestandteil der Gehäusestruktur (22) ein Werkzeug zum Trennen der Gehäuseteile (13, 14) bilden.

2. Motorisch betriebenes Gerät des persönlichen Bedarfs nach Anspruch 1, dadurch gekennzeichnet, daß die Widerlager in einem Abstand versetzt zueinander angeordnet sind, der in etwa der axialen Länge eines der Gehäuseteile (13, 14) entspricht.

3. Motorisch betriebenes Gerät des persönlichen Bedarfs nach Anspruch 1 oder 2, dadurch gekennzeichnet, daß die Widerlager als Aufnahmemittel (29) und Anschlagmittel (31) ausgebildet sind.

4. Motorisch betriebenes Gerät des persönlichen Bedarfs nach einem der Ansprüche 1 bis 3, dadurch gekennzeichnet, daß eine Aufnahmeöffnung (23) und eine Innenwand (25) der Aufnahmeöffnung (23) die beiden Widerlager bilden.

5. Motorisch betriebenes Gerät des persönlichen Bedarfs nach einem der Ansprüche 1 bis 4, dadurch gekennzeichnet, daß das eine Widerlager durch eine Rückwand (32) der Gehäusestruktur (22) und das zweite Widerlager durch einen Zwischenboden (34) der Gehäusestruktur (22) gebildet wird.

6. Motorisch betriebenes Gerät des persönlichen Bedarfs nach einem der Ansprüche 1 bis 5, dadurch gekennzeichnet, daß die Rückwand (32) der Gehäusestruktur (22) eine Aussparung (36) aufweist und die Aussparung (36) sowie das Gehäuse (12) im wesentlichen gleiche, im Durchmesser aufeinander abgestimmte Querschnitte aufweisen.

7. Motorisch betriebenes Gerät des persönlichen Bedarfs nach Anspruch 1, dadurch gekennzeichnet, daß die Gehäusestruktur (22) einen Dom (38) und eine dem Dom (38) gegenüberliegende Fläche (40) aufweist, der Dom (38) das eine Widerlager und die gegenüberliegende Fläche (40) das zweite Widerlager bilden.

8. Motorisch betriebenes Gerät des persönlichen Bedarfs nach Anspruch 7, dadurch gekennzeichnet, daß das Gehäuse (12) eine Aussparung (16) zur Aufnahme des Doms (38) aufweist und die Aussparung (16) im wesentlichen für eine flächige Anlage am Dom (38) ausgebildet ist.

9. Motorisch betriebenes Gerät des persönlichen Bedarfs nach Anspruch 7 oder 8, dadurch gekennzeichnet, daß die dem Dom (38) gegenüberliegende Fläche (40) im wesentlichen zylindrisch gekrümmt und das Gehäuse (12) vorzugsweise zylindrisch ausgebildet ist und gekrümmte Fläche (40) und Gehäuse (12) im wesentlichen gleiche Krümmungsradien aufweisen.

10. Motorisch betriebenes Gerät des persönlichen Bedarfs nach einem der Ansprüche 1 bis 9, dadurch gekennzeichnet, daß die beiden Widerlager durch die Aufnahmeöffnung (23) gebildet werden.

11. Motorisch betriebenes Gerät des persönlichen Bedarfs nach Anspruch 10, dadurch gekennzeichnet, daß die Aufnahmeöffnung (23) einen Innendurchmesser aufweist, der im wesentlichen dem Außendurchmesser des Gehäuses (12) entspricht.

12. Motorisch betriebenes Gerät des persönlichen Bedarfs nach Anspruch 10 oder 11, dadurch gekennzeichnet, daß die Aufnahmeöffnung (23) vorzugsweise in einer Seitenwand (33) der Gehäusestruktur (22) angeordnet ist.

13. Verfahren zum Trennen von Gehäuseteilen eines motorisch betriebenen Gerätes des persönlichen Bedarfs, nach einem der vorhergehenden Ansprüche, gekennzeichnet durch folgende Schritte:
1. Das Gehäuse (12) wird mit dem Gehäuseteil (14) so in die Gehäusestruktur (22) eingebracht, daß das Gehäuseteil (14) zwischen den Widerlagern angeordnet ist,
2. die Gehäusestruktur (22) wird mit einer Hand des Benutzers festgehalten und
3. das Gehäuse (12) wird hebelartig mit der anderen Hand des Benutzers geschwenkt, wobei das Gehäuseteil (14) durch die Widerlager in seiner Position festgelegt wird.

14. Motorisch betriebenes Gerät des persönlichen Bedarfs nach Anspruch 1, dadurch gekennzeichnet, daß beide Widerlager am Dom (38) vorgesehen sind.

15. Motorisch betriebenes Gerät des persönlichen Bedarfs nach Anspruch 14, dadurch gekennzeichnet, daß das eine Widerlager durch den Dom (38) und das zweite Widerlager durch eine einseitig am Dom (38) vorgesehene nasenförmige Erhebung (42) gebildet wird.

16. Verfahren zum Trennen von Gehäuseteilen eines motorisch betriebenen Gerätes des persönlichen Bedarfs, nach einem der Ansprüche 14 oder 15, gekennzeichnet durch folgende Schritte:
1. Das Gehäuse (12) wird mit dem Gehäuseteil (14) von dem Benutzer auf die Gehäusestruktur (22) aufgesetzt, so daß der Dom (38) von der Ausnehmung (16) aufgenommen ist,
2. das Gehäuse (12) wird von einer Hand des Benutzers umfaßt, wobei die Gehäusestruktur (22) mit der zweiten Hand des Benutzers festgehalten wird und
3. das Gehäuse (12) wird um eine Längsmittelachse (54) gedreht.

## Claims

1. A motor-powered appliance for personal use (10) as, for example, an appliance for oral or dental hygiene, a shaver or the like, with a housing (12) for accommodating the drive means (20) as well as at least one rechargeable energy-storage cell (18), with the housing (12) being composed of at least two housing sections (13, 14) sealingly connectible with each other, and with the appliance (10) having an associated case structure (22) incorporating in particular means (24) for charging the energy-storage cells (18), or in particular means (26) for the storage of attachments for the appliance (10), characterized in that the case structure (22) includes two abutment means which, in forming an integral part of the case structure (22), provide a tool for severing the housing sections (13, 14).

2. The motor-powered appliance for personal use as claimed in claim 1, characterized in that the abutment means are disposed in offset relation to each other at a relative distance corresponding approximately to the axial length of one of the housing sections (13, 14).

3. The motor-powered appliance for personal use as claimed in claim 1 or claim 2, characterized in that the abutment means are configured as a locating means (29) and a stop means (31).

4. The motor-powered appliance for personal use as claimed in any one of the claims 1 to 3, characterized in that a receiving opening (23) and an inner wall (25) of the receiving opening (23) form the two abutment means.

5. The motor-powered appliance for personal use as claimed in any one of the claims 1 to 4, characterized in that the one abutment means is formed by a back panel (32) of the case structure (22), while the second abutment means is formed by an intermediate bottom (34) of the case structure (22).

6. The motor-powered appliance for personal use as claimed in any one of the claims 1 to 5, characterized in that the back panel (32) of the case structure (22) includes a cutout (36), and that the cutout (36) and the housing (12) have essentially like cross-sections of mating diameter.

7. The motor-powered appliance for personal use as claimed in claim 1, characterized in that the case structure (22) includes a dome (38) and a surface (40) opposite the dome (38), and that the dome (38) provides the one abutment means and the opposite surface (40) the second abutment means.

8. The motor-powered appliance for personal use as claimed in claim 7, characterized in that the housing (12) is provided with a recess (16) for receiving the dome (38), and that the recess (16) is essentially configured such that its surface area is in abutting engagement with the dome (38).

9. The motor-powered appliance for personal use as claimed in claim 7 or claim 8, characterized in that the surface (40) opposite the dome (38) is curved essentially cylindrically and the housing (12) is preferably of a cylindrical configuration, and that the curved surface (40) and the housing (12) have essentially like radii of curvature.

10. The motor-powered appliance for personal use as claimed in any one of the claims 1 to 9, characterized in that the two abutment means are formed by the receiving opening (23).

11. The motor-powered appliance for personal use as claimed in claim 10, characterized in that the receiving opening (23) has an inside diameter corresponding essentially to the outside diameter of the housing (12).

12. The motor-powered appliance for personal use as claimed in claim 10 or claim 11, characterized in that the receiving opening (23) is preferably arranged in an end panel (33) of the case structure (22).

13. A method of severing housing sections of a motor-powered appliance for personal use, as claimed in any one of the preceding claims, characterized in that it involves the following steps:
1. Introducing the section (14) of the housing (12) into the case structure (22) such that the housing section (14) is arranged between the abutment means;
2. holding the case structure (22) with the one of the user's hands; and
3. swinging the housing (12) with the other of the user's hands in the manner of a lever, in which process the housing section (14) is located in position by the abutment means.

14. The motor-powered appliance for personal use as claimed in claim 1, characterized in that both abutment means are provided on the dome (38).

15. The motor-powered appliance for personal use as claimed in claim 14, characterized in that the one abutment means is provided by the dome (38) while the second abutment means is provided by a lug-shaped protuberance (42) arranged on one side of the dome (38).

16. A method of severing housing sections of a motor-powered appliance for personal use, as claimed in any one of the claims 14 or 15, characterized in that it involves the following steps:
1. Manually seating the one section (14) of the housing (12) onto the case structure (22), such that the dome (38) is received within the recess (16);
2. holding the housing (12) with one of the user's hands, while the user's other hand holds the case structure (22); and
3. rotating the housing (12) about a longitudinal center line (54).

## Revendications

1. Appareil (10) à usage personnel fonctionnant avec un moteur, tel que par exemple un appareil de soins bucco-dentaires, un rasoir ou similaire, comportant un boîtier (12) destiné à recevoir les moyens d'entraînement (20), ainsi qu'au moins une cellule d'accumulation d'énergie (18) rechargeable, le boîtier (12) étant constitué par au moins deux parties (13, 14) de boîtier qui sont susceptibles d'être reliées l'une à l'autre de manière étanche, et une structure (22) de boîtier associée à l'appareil (10), qui présente en particulier des moyens de charge (24) des cellules d'accumulation d'énergie (18) ou en particulier des moyens de réception (26) d'accessoires supplémentaires pour l'appareil (10), caractérisé en ce que la structure (22) de boîtier présente deux contre-appuis qui, en tant que partie intégrale de la structure (22) du boîtier, forment un outil pour séparer les parties (13, 14) du boîtier.

2. Appareil à usage personnel fonctionnant avec un moteur selon la revendication 1, caractérisé en ce que les contre-appuis sont agencés en décalage l'un par rapport à l'autre avec une distance qui correspond approximativement à la longueur axiale de l'une des parties (13, 14) du boîtier.

3. Appareil à usage personnel fonctionnant avec un moteur selon la revendication 1, caractérisé en ce que les contre-appui sont réalisés sous la forme de moyens de réception (29) et de moyens de butée (31).

4. Appareil à usage personnel fonctionnant avec un moteur selon l'une quelconque des revendications 1 à 3, caractérisé en ce qu'un orifice de réception (23) et une paroi intérieure (25) de l'orifice de réception (23) forment les deux contre-appuis.

5. Appareil à usage personnel fonctionnant avec un moteur selon l'une quelconque des revendications 1à 4, caractérisé en ce que l'un des contre-appuis est formé par une paroi postérieure (32) de la structure (22) du boîtier et en ce que le seconde contre-appui est formé par un fond intermédiaire (34) de la structure (22) du boîtier.

6. Appareil à usage personnel fonctionnant avec un moteur selon l'une quelconque des revendications 1 à 5, caractérisé en ce que la paroi postérieure (32) de la structure (22) de boîtier présente un évidement (36), et en ce que l'évidement (36) ainsi que le boîtier (12) présentent des sections transversales sensiblement semblables, adaptées l'une à l'autre par leur diamètre.

7. Appareil à usage personnel fonctionnant avec un moteur selon la revendication 1, caractérisé en ce que la structure (22) de boîtier présente un dôme (38) et une surface (40) opposée au dôme (38), le dôme (38) formant l'un des contre-appuis et la surface (40) opposée formant le second contre-appui.

8. Appareil à usage personnel fonctionnant avec un moteur selon la revendication 7, caractérisé en ce que le boîtier (12) présente un évidement (16) destiné à recevoir le dôme (38) et en ce que l'évidement (16) est réalisé essentiellement pour un appui de surface sur le dôme (38).

9. Appareil à usage personnel fonctionnant avec un moteur selon l'une ou l'autre des revendications 7 et 8, caractérisé en ce que la surface (40) opposée au dôme (38) présente une courbure sensiblement cylindrique, en ce que le boîtier (12) est réalisé de préférence cylindrique, et en ce que la surface (40) incurvée et le boîtier (12) présentent des rayons de courbure sensiblement égaux.

10. Appareil à usage personnel fonctionnant avec un moteur selon l'une quelconque des revendications 1à 9, caractérisé en ce que les deux contre-appuis sont formés par l'orifice de réception (23).

11. Appareil à usage personnel fonctionnant avec un moteur selon la revendication 10, caractérisé en ce que l'orifice de réception (23) présente un diamètre intérieur qui correspond sensiblement au diamètre extérieur du boîtier (12).

12. Appareil à usage personnel fonctionnant avec un moteur selon l'une ou l'autre des revendications 10 et 11, caractérisé en ce que l'orifice de réception (23) est agencé de préférence dans une paroi latérale (33) de la structure (22) de boîtier,

13. Procédé de séparation de parties de boîtier d'un appareil à usage personnel fonctionnant avec un moteur selon l'une quelconque des revendications précédentes, caractérisé par les étapes suivantes :
1. le boîtier (12) est monté avec la partie (14) de boîtier dans la structure (22) de boîtier de telle sorte que la partie (14) de boîtier est agencée entre les contre-appuis,
2. l'utilisateur retient avec une main la structure (22) de boîtier, et
3. avec l'autre main, l'utilisateur pivote le boîtier (12) à la manière d'un levier, la partie (14) de boîtier étant bloquée dans sa position grâce aux contre-appuis.

14. Appareil à usage personnel fonctionnant avec un moteur selon revendication 1, caractérisé en ce que les deux contre-appuis sont prévus sur le dôme (38).

15. Appareil à usage personnel fonctionnant avec un moteur selon la revendication 14, caractérisé en ce que l'un des contre-appuis est formé par le dôme (38) et en ce que le second contre-appui est formé grâce à un relief (42) en forme de tenon prévu d'un côté sur le dôme (38).

16. Procédé de séparation de parties de boîtier d'un appareil à usage personnel fonctionnant avec un moteur selon l'une ou l'autre des revendications 14 et 15, caractérisé par les étapes suivantes :
1. l'utilisateur place le boîtier (12) avec la partie (14) de boîtier sur la structure (22) de boîtier, de sorte que le dôme (38) est reçu par l'évidement (16),
2. le boîtier (12) est saisi d'une main par l'utilisateur qui retient avec l'autre main la structure (22) de boîtier, et
3. le boîtier (12) est tourné autour d'un axe médian longitudinal (54).
